# EUROPEAN PATENT APPLICATION

(11) **EP 4 844 564 A1**
(43) Date of publication of application: **25.11.2026**
(21) Application number: 25208837.2
(22) Date of filing: 15.10.2025
(51) Int. Cl.: G06F 3/12

(54) **INFORMATION PROCESSING SYSTEM, INFORMATION PROCESSING METHOD, AND INFORMATION PROCESSING PROGRAM**

(30) Priority: 23.05.2025 JP 2025086624
(71) Applicant: FUJIFILM Business Innovation Corp., Minato-ku Tokyo (JP)
(72) Inventor: HARA, Yuki, Yokohama-shi, Kanagawa (JP); KOMAKI, Nobutaka, Yokohama-shi, Kanagawa (JP); YONEDA, Shigeru, Yokohama-shi, Kanagawa (JP)
(74) Representative: Becker Kurig & Partner Patentanwälte mbB

(57) **Abstract**

An information processing system includes a processor configured to use a machine learning model generated using, as training data, printed material data to be printed by a job, request source information that identifies a request source of printing, and a history of print settings for printing of the job, to output, in a case where input of the printed material data and the request source information is received, the print settings that are recommended.

## Description

### BACKGROUND OF THE INVENTION

### (i) Field of the Invention

The technology of the present disclosure relates to an information processing system, an information processing method, and an information processing program.

### (ii) Description of Related Art

JP2019-139614A discloses a technology of regenerating rules for print settings in machine learning. In the technology of JP2019-139614A, by creating a second population with setting information of some jobs based on characteristics of a printed material, specifying setting candidates using the second population, and creating rules that associate the setting information with the setting candidates, it is possible to improve the accuracy of the setting candidates displayed in an input unit for print setting screen items.

### SUMMARY OF THE INVENTION

In the related art, a technology of outputting recommended print settings in printing a job has been known. However, in the related art, a request source of printing has not been considered. Therefore, there is an issue that the tendency of each request source is not appropriately reflected in the print settings.

The present disclosure has been made in view of such an issue, and an object of the present disclosure is to provide an information processing system, an information processing method, and an information processing program that can recommend print settings reflecting a tendency of each request source in a case of printing a job, as compared to a case where a request source of printing is not taken into consideration.

According to a first aspect of the present disclosure, there is provided an information processing system including: a processor configured to: use a machine learning model generated using, as training data, printed material data to be printed by a job, request source information that identifies a request source of printing, and a history of print settings for printing of the job, to output, in a case where input of the printed material data and the request source information is received, the print settings that are recommended.

According to a second aspect of the present disclosure, in the information processing system according to the first aspect, the machine learning model may be generated further using, as the training data, a history of distribution destination information that identifies a distribution destination of a printed material, and the processor may be configured to: output, in a case where input of the distribution destination information is further received, the print settings corresponding to the distribution destination.

According to a third aspect of the present disclosure, in the information processing system according to the first or second aspect, the machine learning model may use, as a target of the training data, a print history of the job registered by a registrant who satisfies a predetermined condition.

According to a fourth aspect of the present disclosure, in the information processing system according to the third aspect, the processor may be configured to: determine the registrant who satisfies the predetermined condition based on years of service.

According to a fifth aspect of the present disclosure, in the information processing system according to the third or fourth aspect, the processor may be configured to: determine the registrant who satisfies the predetermined condition based on designation by a user.

According to a sixth aspect of the present disclosure, in the information processing system according to any one of the third to fifth aspects, the processor may be configured to: determine the registrant who satisfies the predetermined condition based on the number of registrations of the job.

According to a seventh aspect of the present disclosure, in the information processing system according to any one of the first to sixth aspects, the machine learning model may be generated further using, as the training data, a history of registrant information that identifies a registrant of the job, and the processor may be configured to: output, in a case where input of the registrant information is further received, the print settings corresponding to the registrant.

According to an eighth aspect of the present disclosure, in the information processing system according to the seventh aspect, the processor may be configured to: output, in a case where input of the registrant information that designates a plurality of registrants is received, integrated print settings obtained by integrating the print settings corresponding to each of the plurality of registrants.

According to a ninth aspect of the present disclosure, in the information processing system according to the seventh or eighth aspect, the processor may be configured to: output, in a case where input of the registrant information that designates a plurality of registrants is received, a plurality of preview images respectively printed with the print settings corresponding to each of the plurality of registrants.

According to a tenth aspect of the present disclosure, there is provided an information processing method executed by a computer, the information processing method including: using a machine learning model generated using, as training data, printed material data to be printed by a job, request source information that identifies a request source of printing, and a history of print settings for printing of the job, to output, in a case where input of the printed material data and the request source information is received, the print settings that are recommended.

According to an eleventh aspect of the present disclosure, there is provided an information processing program causing a computer to execute a process including: using a machine learning model generated using, as training data, printed material data to be printed by a job, request source information that identifies a request source of printing, and a history of print settings for printing of the job, to output, in a case where input of the printed material data and the request source information is received, the print settings that are recommended.

According to the first, tenth, and eleventh aspects of the present disclosure, the print settings reflecting the tendency of each request source may be recommended in a case of printing the job, as compared to a case where the request source of printing is not taken into consideration.

According to the second aspect of the present disclosure, the print settings reflecting not only the request source of printing but also the tendency of each distribution destination of the printed material may be recommended.

According to the third aspect of the present disclosure, only the history registered by the registrant who satisfies the predetermined condition may be used as a target of learning.

According to the fourth aspect of the present disclosure, the history based on a degree of accumulated work experience and knowledge in accordance with the years of service may be used as a target of learning.

According to the fifth aspect of the present disclosure, the history based on the user's intentions or performance evaluations may be used as a target of learning.

According to the sixth aspect of the present disclosure, the history based on a degree of accumulated work experience or knowledge in accordance with an actual work performance may be used as a target of learning.

According to the seventh aspect of the present disclosure, the individual print settings in which not only the request source of printing but also the tendency of each registrant is taken into consideration may be recommended.

According to the eighth aspect of the present disclosure, the print settings obtained by integrating knowledge of the plurality of registrants may be recommended.

According to the ninth aspect of the present disclosure, the information that supports comparison and consideration of the print settings may be provided to the user.

### BRIEF DESCRIPTION OF THE DRAWINGS

Exemplary embodiment(s) of the present invention will be described in detail based on the following figures, wherein:
FIG. 1 is a diagram illustrating an example of a schematic configuration of a printing system 1;
FIG. 2 is a diagram illustrating an example of a hardware configuration of an information processing system 100 according to the present disclosure;
FIG. 3 is a diagram illustrating an example of a functional configuration of the information processing system 100 according to the present disclosure;
FIG. 4 is a diagram illustrating an example of a flow of information processing executed by the information processing system 100 according to the present disclosure in a training phase;
FIG. 5 is a diagram illustrating an example of a flow of information processing executed by the information processing system 100 according to the present exemplary embodiment in an inference phase;
FIG. 6 is a diagram illustrating an example of a print setting automatic generation screen;
FIG. 7 is a diagram illustrating an example of an integrated print setting display screen;
FIG. 8 is a diagram illustrating an example of a setting selection screen; and
FIG. 9 is a diagram illustrating an example of a preview image comparison screen.

### DETAILED DESCRIPTION OF THE INVENTION

Hereinafter, examples of exemplary embodiments of the technology of the present disclosure will be described with reference to the accompanying drawings. In each drawing, the identical or equivalent components and parts are denoted by the identical reference numerals. The dimensional ratios in the drawings are exaggerated for convenience of description and may differ from the actual ratios.

### <First Exemplary Embodiment>

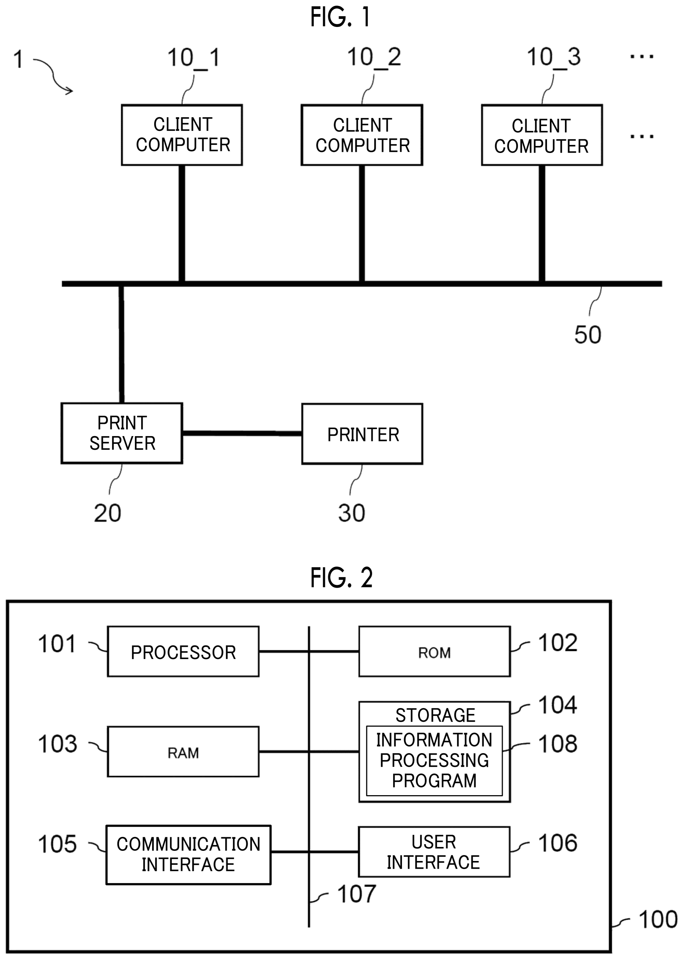

FIG. 1 is a diagram illustrating an example of a schematic configuration of a printing system 1. The printing system 1 includes a client computer 10, a print server 20, and a printer 30. These devices are connected to each other via a communication unit 50.

The client computer 10 is an input device for a user to input an instruction related to printing. The client computer 10 generates a job based on the instruction from the user. The client computer 10 transmits the generated job to the print server 20.

The print server 20 is a processing device that processes the job received from the client computer 10. The print server 20 converts printed material data included in the job into an output format suited for the printer 30, and transmits the converted job to the printer 30. In this case, the print server 20 executes output control based on the print settings.

The printer 30 is an image forming device that executes printing in response to the reception of the job from the print server 20. The printer 30 forms an image in response to a control command from the print server 20, and prints the formed image on paper.

The communication unit 50 is a network that connects the client computer 10, the print server 20, and the printer 30 to each other, and includes a wired or wireless communication line.

In FIG. 1, an example is illustrated in which three client computers 10, one print server 20, and one printer 30 are configured. However, each number of devices is not limited thereto.

In addition, in FIG. 1, an example is illustrated in which the print server 20 and the printer 30 are configured as independent separate devices. However, the print server 20 and the printer 30 may be configured as an integrated device.

In the related art, a technology of outputting recommended print settings using a machine learning model in a case of printing the job has been known. However, in the related art, only the characteristics of the printed material are taken into consideration in a case of outputting the print settings, and a request source of printing is not taken into consideration at all. Here, it is common practice in business to manage request source information within a workflow. However, a technology of using such information as input information for inferring the print settings has not been known. Therefore, there is an issue that, even in a case where the tendency varies for each request source, the tendency is not appropriately reflected in the print settings. Therefore, the information processing system 100 according to the present disclosure may recommend the print settings reflecting the tendency of each request source in a case of printing the job, as compared to a case where the request source of printing is not taken into consideration.

Such an information processing system 100 will be described in detail. Hereinafter, a case where the print server 20 functions as the information processing system 100 according to the present disclosure will be described as an example. However, the present disclosure is not limited thereto, and the printer 30 may function as the information processing system 100 according to the present disclosure. Further, both the print server 20 and the printer 30 may function as the information processing system 100 according to the present disclosure. That is, the information processing according to the present disclosure may be processed by the print server 20, may be processed by the printer 30, or may be distributed and processed by the print server 20 and the printer 30.

FIG. 2 is a diagram illustrating an example of a hardware configuration of the information processing system 100 according to the present disclosure. The information processing system 100 includes a processor 101, a read only memory (ROM) 102, a random access memory (RAM) 103, a storage 104, a communication interface 105, and a user interface 106. The above configurations are communicably connected to each other via a bus 107.

The processor 101 executes various programs and controls the respective configurations. The ROM 102 stores various programs and various data. The RAM 103 temporarily stores the programs or the data as a work area. The storage 104 is configured by, for example, a hard disk drive (HDD) or a solid state drive (SSD), and stores various programs including an operating system and various data.

In the information processing system 100, an information processing program 108 is stored in the ROM 102 or the storage 104. In FIG. 2, an example is illustrated in which the information processing program 108 is stored in the storage 104. In this case, the processor 101 reads out the information processing program 108 from the storage 104, and executes the information processing program 108 by using the RAM 103 as the work area, to execute the control of each configuration in accordance with the information processing program 108 and various types of arithmetic processing.

The communication interface 105 is an interface for the information processing system 100 to communicate with another device. The user interface 106 is an input/output interface for the information processing system 100 to exchange information with the user. The user interface 106 may include a controller, a touch panel, a keyboard, a mouse, a microphone, and the like as input devices, and may include a monitor, a speaker, and the like as output devices.

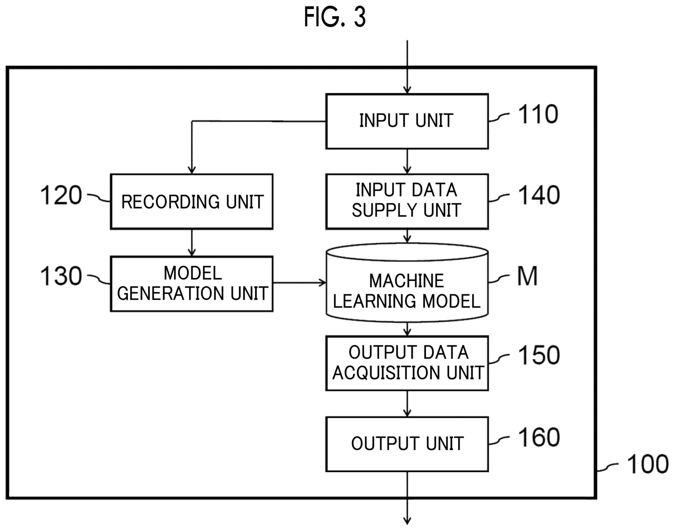

FIG. 3 is a diagram illustrating an example of a functional configuration of the information processing system 100 according to the present disclosure. The information processing system 100 includes an input unit 110, a recording unit 120, a model generation unit 130, an input data supply unit 140, an output data acquisition unit 150, and an output unit 160. These functional configurations may be implemented in the information processing system 100 by the processor 101 reading out the information processing program 108 from the ROM 102 or the storage 104, and loading the information processing program 108 into the RAM 103 to execute the information processing program 108.

The input unit 110 is a functional unit for receiving input of various types of information. The recording unit 120 is a functional unit for recording a print history. The model generation unit 130 is a functional unit for generating a machine learning model M using the print history as training data. The input data supply unit 140 is a functional unit for supplying input data to the machine learning model M. The output data acquisition unit 150 is a functional unit for acquiring output data from the machine learning model M. The output unit 160 is a functional unit for outputting the recommended print settings based on the output data.

In FIG. 3, an example is illustrated in which the machine learning model M is stored in the information processing system 100. However, the machine learning model M may be stored outside the information processing system 100, for example, in the cloud.

First, in an information processing method executed by the information processing system 100 including such functional units, a training phase of generating the machine learning model M will be described.

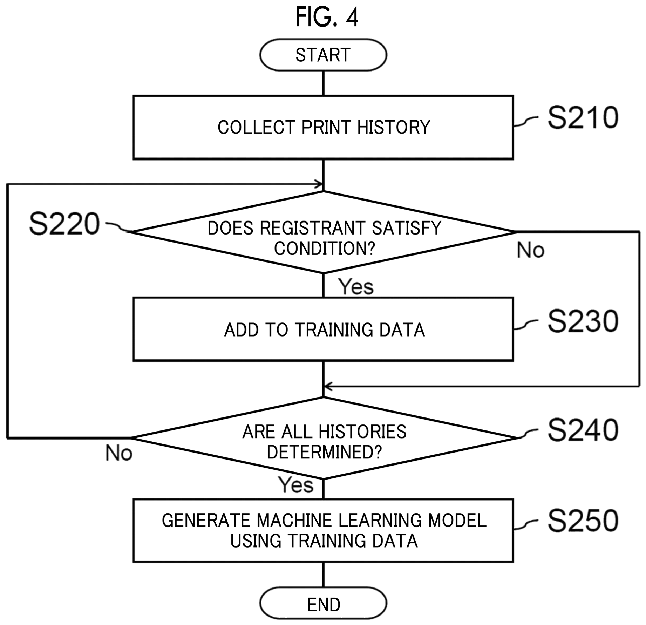

FIG. 4 is a diagram illustrating an example of a flow of information processing executed by the information processing system 100 according to the present disclosure in the training phase. The present flow may be started by the processor 101 reading out the information processing program 108 from the ROM 102 or the storage 104, and loading the information processing program 108 into the RAM 103 to execute the information processing program 108.

In step S210, the processor 101 functions as the model generation unit 130 to collect the print history. Here, the recording unit 120 may record an information set including the job and the request source information input via the input unit 110 in the past printing, as the print history.

Here, the job includes the print settings, metadata, and the printed material data. The print settings indicate various items set in a case of printing the job. The print settings may include, for example, settings for paper (paper size, paper type, paper thickness, selection of a paper feed tray, and the like). In addition, the print settings may include settings for a printing method (single-sided printing or two-sided printing, binding direction, page orientation, print magnification, enlargement/reduction ratio, margin settings, and the like). In addition, the print settings may include settings for color and image quality (monochrome printing or color printing, resolution, color profile, and the like). In addition, the print settings may include settings for a page and a layout (print range, number of printed pages, page order, page allocation, and the like).

The metadata is additional information associated with the job. The metadata may include registrant information that identifies a registrant who has registered the job. The registrant information may be, for example, a user ID or a login ID of the registrant who has registered the job, or a terminal ID or a network ID of the client computer 10 used by the registrant.

The printed material data is data of the printed material to be printed by the job. The printed material data is composed of, for example, text information, font information, image information, and the like. Therefore, the type of the printed material (for example, a book, a magazine, or a flyer) and the structure (for example, only text, only a photograph, or including text and a photograph) can be specified from the printed material data. There is a correlation between the printed material data and the print settings. For example, in a case where the type of the printed material is a book, two-sided printing or saddle stitching tends to be adopted. In addition, in a case where the structure of the printed material is only text, monochrome printing tends to be adopted instead of color printing.

The request source information is information that identifies the request source of printing. The request source information may be, for example, information on an advertising agency ●● company or a newspaper company ×× company. There is a correlation between the request source information and the print settings. For example, in a case where the request source is an advertising agency, high-resolution color printing tends to be adopted. In addition, in a case where the request source is the newspaper company, monochrome printing with relatively low resolution tends to be adopted.

In the above description, an example is illustrated in which the request source information is information that identifies a company, but the present disclosure is not limited thereto. Even within the same company, the tendency may be different depending on a department. Similarly, even within the same department, the tendency may be different depending on a person in charge. Therefore, the request source information may be information that identifies any unit, such as the company, the department, and the person in charge.

The recording unit 120 may record an information set including the job and the request source information related to the past printing, as the print history. Therefore, the processor 101 can collect such an information set as the print history.

In step S220, the processor 101 functions as the model generation unit 130 to determine whether or not the registrant satisfies a predetermined condition for a target history to be determined in the print history collected in step S210. As described above, the registrant information is included in the job. Therefore, the processor 101 can determine whether or not the target history is the print history of the job registered by the registrant who satisfies the predetermined condition by analyzing the registrant information. In a case where it is determined that the registrant satisfies the predetermined condition, the processor 101 proceeds to step S230.

In step S230, the processor 101 functions as the model generation unit 130 to add the target history to the training data. Then, the processor 101 proceeds to step S240.

On the other hand, in a case where it is determined in step S220 that the registrant does not satisfy the predetermined condition, the processor 101 proceeds to step S240. That is, the processor 101 omits the processing of step S230.

In this case, the processor 101 may determine the registrant who satisfies the predetermined condition based on years of service. As an example, the processor 101 may determine a registrant having the years of service equal to or longer than a predetermined period as the registrant who satisfies the predetermined condition. As a result, the processor 101 can use the print history in which the knowledge gained over many years of the workflow is reflected, as a target of learning.

On the contrary, the processor 101 may determine a registrant having the years of service shorter than the predetermined period as the registrant who satisfies the predetermined condition. As a result, the processor 101 can use the print history in which the knowledge gained in the latest business flow is reflected in an environment in which the workflow is updated daily, as a target of learning.

However, long years of service do not always mean a lot of practical experience, and short years of service do not always mean a little practical experience. Therefore, the processor 101 may determine the registrant who satisfies the predetermined condition based on the number of registrations of the job. As an example, the processor 101 may determine a registrant having the number of registrations of the job equal to or larger than a predetermined number of registrations as the registrant who satisfies the predetermined condition. As a result, the processor 101 can use the print history in which the knowledge gained in the actual work experience is reflected, as a target of learning.

In addition, the processor 101 may determine the registrant who satisfies the predetermined condition based on designation by the user. As an example, the user may designate a person who has registered the job of the printed material having a good reputation from the request source or the distribution destination. Then, the processor 101 may determine the registrant designated by the user as the registrant who satisfies the predetermined condition. As a result, the processor 101 can use the print history in which people's opinions such as opinions of the user, the request source, the distribution destination, and the like are reflected, as a target of learning.

In step S240, the processor 101 functions as the model generation unit 130 to determine whether or not all the histories in the print history collected in step S210 are determined. In a case where it is determined that all the histories are not determined, the processor 101 returns to step S220. Then, the processor 101 changes the target history to a next history, and repeatedly executes the processing of step S220 to step S240. In a case where it is determined in step S240 that all the histories are determined, the processor 101 proceeds to step S250.

In step S250, the processor 101 functions as the model generation unit 130 to generate the machine learning model M using the training data added in step S230. As described above, the machine learning model M may be generated using the print history of the job registered by the registrant who satisfies the predetermined condition, as a target of the training data. An existing algorithm may be used as the machine learning algorithm itself, and thus detailed description will be omitted here. Then, the processor 101 ends the present flow.

That is, the machine learning model M is generated using, as the training data, the printed material data to be printed by the job, the request source information that identifies the request source of printing, and the history of the print settings for the printing of the job. The flow of the information processing executed by the information processing system 100 in the training phase has been described above. Next, an inference phase of outputting the recommended print settings using the machine learning model M will be described.

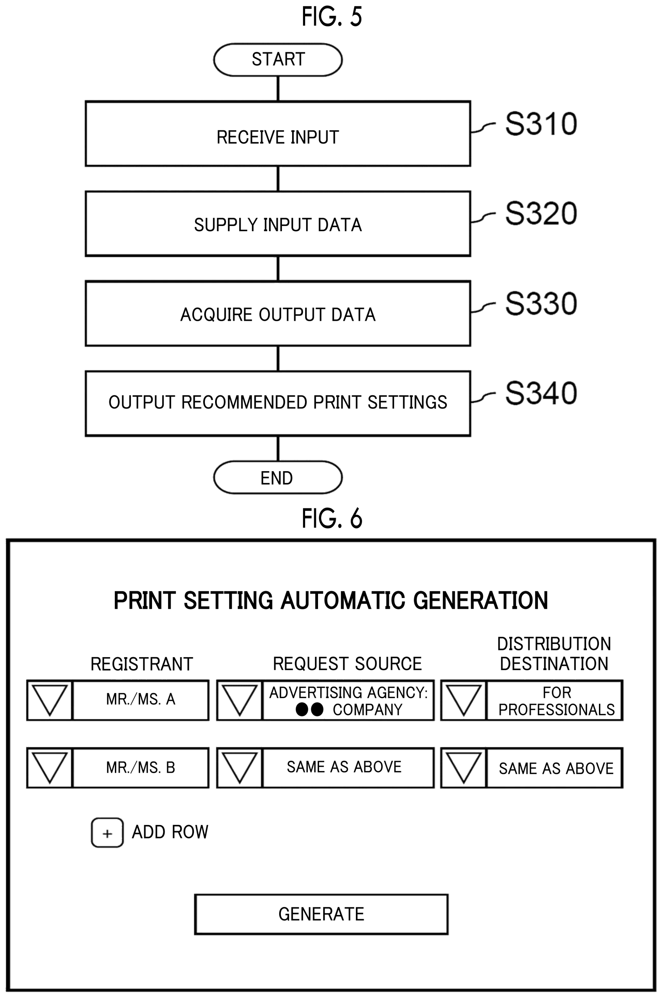

FIG. 5 is a diagram illustrating an example of a flow of information processing executed by the information processing system 100 according to the present exemplary embodiment in the inference phase. The present flow may also be started by the processor 101 reading out the information processing program 108 from the ROM 102 or the storage 104, and loading the information processing program 108 into the RAM 103 to execute the information processing program 108.

In step S310, the processor 101 functions as the input unit 110 to receive the input of the printed material data and the request source information.

In step S320, the processor 101 functions as the input data supply unit 140 to supply the input data including the printed material data and the request source information input in step S310 to the machine learning model M. In a case where the input data is supplied, the machine learning model M outputs an inference result corresponding to the input data. In this case, the inference result is the print settings corresponding to the request source.

In step S330, the processor 101 functions as the output data acquisition unit 150 to acquire the inference result inferred by the machine learning model M as the output data.

In step S340, the processor 101 functions as the output unit 160 to output the recommended print settings based on the output data. In this case, the processor 101 may display a preview image reflecting the recommended print settings.

However, the display form is not limited to this form. The processor 101 may display the recommended print settings without any change as data. In addition, in the above description, an example is illustrated in which the output form is display, but the present disclosure is not limited thereto. The processor 101 may transmit and output the recommended print settings to another device or another functional unit, may output the recommended print settings as audio, or may output the recommended print settings by printing.

Then, the processor 101 ends the present flow. For example, in a case where the processor 101 receives the input of the printed material data and the request source information, the processor 101 outputs the recommended print settings using the machine learning model M.

As described above, the information processing system 100 according to the first exemplary embodiment uses the machine learning model generated using, as the training data, the printed material data to be printed by the job, the request source information that identifies the request source of printing, and the history of the print settings for printing of the job, to output, in a case where the input of the printed material data and the request source information is received, the print settings that are recommended. As a result, with the information processing system 100 according to the first exemplary embodiment, the print settings reflecting the tendency of each request source may be recommended in a case of printing the job, as compared to a case where the request source of printing is not taken into consideration.

### <Second Exemplary Embodiment>

In the first exemplary embodiment, a case where the print settings recommended by considering the request source of printing are output has been described. In the second exemplary embodiment, in addition to the above case, a case where the print settings recommended by considering the distribution destination of the printed material are output will be described.

In the first exemplary embodiment, the recording unit 120 records the information set including the job and the request source information, as the print history. On the other hand, in the second exemplary embodiment, the recording unit 120 records the information set including the distribution destination information in addition to the job and the request source information, as the print history.

The distribution destination information is information that identifies the distribution destination of the printed material. The distribution destination information may be, for example, information such as "for the general public", "for professionals", and "for businesses". There is a correlation between the distribution destination information and the print settings. For example, in a case where the distribution destination is for the general public, printing with relatively low resolution tends to be adopted. On the other hand, in a case where the distribution destination is for professionals, printing with relatively high resolution tends to be adopted. The distribution destination information may be information that identifies any unit, as in the request source information.

Therefore, in the second exemplary embodiment, the machine learning model M is generated further using, as the training data, the history of the distribution destination information that identifies the distribution destination of the printed material.

In this case, in step S310, the processor 101 further receives the input of the distribution destination information in addition to the printed material data and the request source information.

Then, in step S320, the processor 101 supplies the input data including the printed material data, the request source information, and the distribution destination information to the machine learning model M. In a case where the input data is supplied, the machine learning model M outputs the inference result corresponding to the input data. In this case, the inference result is the print settings corresponding to the distribution destination.

As described above, the information processing system 100 according to the second exemplary embodiment outputs the print settings corresponding to the distribution destination in a case where the input of the distribution destination information that identifies the distribution destination of the printed material is further received. As a result, with the information processing system 100 according to the second exemplary embodiment, the print settings reflecting not only the request source of printing but also the tendency of each distribution destination of the printed material may be recommended.

### <Third Exemplary Embodiment>

In the first exemplary embodiment, a case where the print settings recommended by considering the request source of printing are output has been described. In addition, in the second exemplary embodiment, a case where the print settings recommended by considering the distribution destination of the printed material are output has been described.

However, even in a case where the request source or the distribution destination are identical, the print settings may not be identical in a case where the registrants of the job are different. For example, there is a case where the tendency or the strength and weakness of the settings vary for each registrant, such as a registrant A excelling at color settings and a registrant B excelling at imposition settings. Therefore, in a third exemplary embodiment, it is possible to output the print settings corresponding to the registrant by designating the registrant of the job.

As described above, the job may include the print settings, the metadata, and the printed material data. In addition, the metadata may include the registrant information that identifies the registrant who has registered the job. Here, in the first exemplary embodiment, a case where the print history of the job registered by the registrant who satisfies the predetermined condition is used as the target of the training data by using the registrant information has been described. However, in this case, the condition of the registrant is merely imposed on the selection of the training data, and the generated machine learning model M itself is configured as a single model independent of the registrant.

On the other hand, in the third exemplary embodiment, the processor 101 generates the machine learning model M for each registrant. The expression "generate the machine learning model M for each registrant" means that the model for each registrant can be operated in a theoretically or functionally distinguishable manner, and does not always mean that a plurality of physically independent models are prepared. For example, a configuration may be included in which a parameter group or a partial model corresponding to the registrant is held in one physical model structure and operates as a model corresponding to the registrant.

Here, it is assumed that the recording unit 120 records the job registered by the registrant A and the job registered by the registrant B, as the print history. In this case, the processor 101 may generate a machine learning model Ma using, as the training data, the print history of the job registered by the registrant A. Similarly, the processor 101 may generate a machine learning model Mb using, as the training data, the print history of the job registered by the registrant B. As described above, in the third exemplary embodiment, the machine learning model M may be generated further using, as the training data, a history of the registrant information that identifies the registrant of the job.

In this case, in step S310, the processor 101 may further receive the input of the registrant information in addition to the printed material data and the request source information.

In step S320, the processor 101 may select the machine learning model M to be used for the inference, based on the registrant information. For example, in a case where the input registrant information is information that identifies the registrant A, the processor 101 may select the machine learning model Ma as the model to be used for the inference. Next, the processor 101 may supply the input data including the printed material data and the request source information to the machine learning model Ma. In a case where the input data is supplied, the machine learning model Ma outputs the inference result corresponding to the input data. In this case, the inference result is the print settings corresponding to the registrant A.

Instead of the above-described configuration, the processor 101 may supply the input data including the registrant information to the machine learning model M, and branch the processing within the model based on the registrant information. For example, a configuration may be adopted in which a parameter group or a partial model corresponding to a plurality of registrants is held in the machine learning model M, and the parameter group or the partial model is selectively applied based on the input registrant information. With such a configuration, the processor 101 does not need to execute the processing of selecting the model to be used for the inference, and the inference corresponding to the registrant can be achieved in the machine learning model M.

As described above, the information processing system 100 according to the third exemplary embodiment outputs the print settings corresponding to the registrant in a case where the input of the registrant information that identifies the registrant who has registered the job is further received. As a result, with the information processing system 100 according to the third exemplary embodiment, the individual print settings in which not only the request source of printing but also the tendency of each registrant is taken into consideration may be recommended.

### <Fourth Exemplary Embodiment>

In the third exemplary embodiment, a case where one registrant (for example, the registrant A) is designated has been described. On the other hand, in a fourth exemplary embodiment, a case where a plurality of registrants (for example, the registrant A and the registrant B) are designated will be described.

In this case, in step S310, the processor 101 may further receive the input of the registrant information that designates the plurality of registrants in addition to the printed material data and the request source information.

Next, in step S320, the processor 101 may supply the input data to each of a plurality of machine learning models M corresponding to the plurality of registrants. For example, in a case where the registrant A and the registrant B are designated, the processor 101 may supply the input data to each of the machine learning models Ma and Mb. Therefore, the inference processing may be executed twice using the machine learning models Ma and Mb.

As a result, in step S330, the processor 101 may acquire each of an inference result Ra by the machine learning model Ma and an inference result Rb by the machine learning model Mb as the output data.

Then, in step S340, the processor 101 may output integrated print settings obtained by integrating the inference results Ra and Rb. Here, the expression "integrate" includes adjusting or aggregating the print settings included in each inference result R based on the item content of the print settings, and reconstructing the print settings as one consistent print setting.

FIG. 6 is a diagram illustrating an example of a print setting automatic generation screen. Boxes for inputting the information on the registrant, the request source, and the distribution destination may be provided on the print setting automatic generation screen. These boxes may be provided over a plurality of rows, or may be configured such that a row can be added by an "add row" button. As a result, the user can input a plurality of pieces of information for at least any one of the items of the registrant, the request source, or the distribution destination.

Here, an example is illustrated in which, in a case where the printed material for which the printing is requested from the advertising agency ●● company is distributed for professionals, the registrant A and the registrant B are designated as the registrants of the job. For example, as described above, the processor 101 can receive the input of the registrant information, the request source information, and the distribution destination information. Here, it is assumed that the processor 101 has already acquired the printed material data by another unit. In this case, the processor 101 acquires the inference results Ra and Rb using the machine learning models Ma and Mb, respectively.

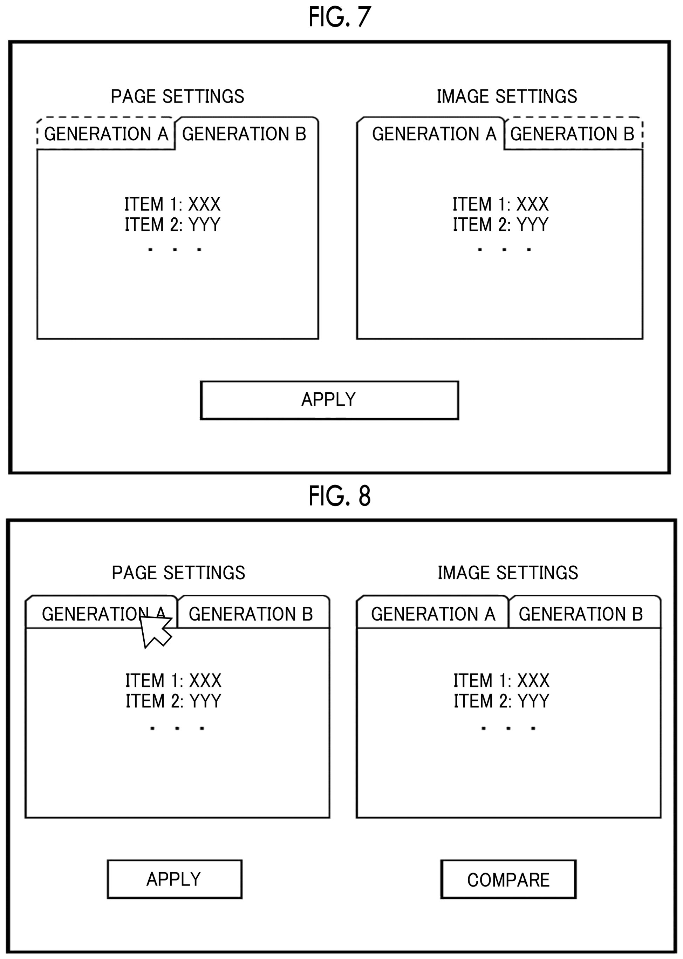

FIG. 7 is a diagram illustrating an example of an integrated print setting display screen. The print settings recommended for the page settings are displayed on the left side of the screen, and the print settings recommended for the image settings are displayed on the right side of the screen. Here, an example is illustrated in which the inference result Rb using the machine learning model Mb corresponding to the registrant B who excels at imposition settings is adopted for the page settings, and the inference result Ra using the machine learning model Ma corresponding to the registrant A who excels at color settings is adopted for the image settings.

As described above, the information processing system 100 according to the fourth exemplary embodiment outputs the integrated print settings obtained by integrating the print settings corresponding to each of the plurality of registrants in a case where the input of the registrant information that designates the plurality of registrants is received. As a result, with the information processing system 100 according to the fourth exemplary embodiment, the print settings obtained by integrating knowledge of the plurality of registrants may be recommended.

In the above description, an example has been described in which the plurality of inference results R inferred by the plurality of machine learning models M corresponding to the plurality of registrants are integrated and output, but the present disclosure is not limited to this. The processor 101 may generate a preview image in each case of being printed by using each inference result R, and output a plurality of generated preview images.

For example, it is assumed that the processor 101 acquires the inference results Ra and Rb as the output data. In this case, the processor 101 may generate a preview image Pa in a case of being printed by the print settings based on the inference result Ra and a preview image Pb in a case of being printed by the print settings based on the inference result Rb, and output the generated preview images.

As described above, the information processing system 100 according to the fourth exemplary embodiment can also output the plurality of preview images respectively printed with the print settings corresponding to each of the plurality of registrants in a case where the input of the registrant information that designates the plurality of registrants is received. As a result, with the information processing system 100 according to the fourth exemplary embodiment, the information that supports comparison and consideration of the print settings may be provided to the user.

In this case, the processor 101 may have a configuration in which the print settings included in each inference result R can be individually controlled for each setting item such as the page settings or the image settings. That is, the processor 101 may display a setting selection screen on which the user can select which inference result R of the registrant to adopt for each setting item, before outputting the preview image.

FIG. 8 is a diagram illustrating an example of the setting selection screen. Switching tabs may be provided on the setting selection screen for each setting item. Here, an example is illustrated in which the options of "generation A" and "generation B" are displayed on tabs for the page settings, and the options of "generation A" and "generation B" are also displayed on tabs for the image settings. In this case, the user can select whether to adopt the inference result Ra or the inference result Rb for each setting item by switching between these tabs.

Then, the processor 101 may configure the print settings based on a combination of the setting item selected by the user on the setting selection screen and the registrant, and generate the preview image reflecting the print settings.

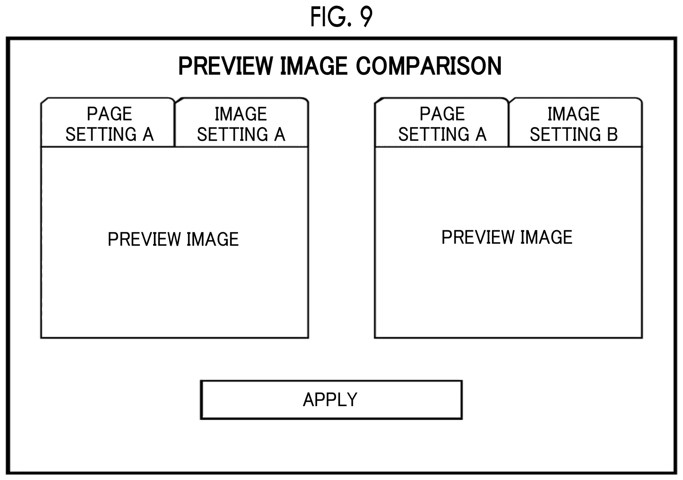

FIG. 9 is a diagram illustrating an example of a preview image comparison screen. Here, an example is illustrated in which the preview image in a case where the registrant A is selected for the page settings and the registrant A is selected for the image settings is displayed on the left side of the screen, and the preview image in a case where the registrant A is selected for the page settings and the registrant B is selected for the image settings is displayed on the right side of the screen.

With such a configuration, the user can select a combination of contents that are most suited for each item from the print settings based on the knowledge or the experience of each registrant.

Although the exemplary embodiments of the present disclosure have been described in detail with reference to the accompanying drawings, the technical scope of the present disclosure is not limited to such examples. It is clear that a person having ordinary knowledge in the technical field of the present disclosure can conceive various modification examples or altered examples within the technical idea described in the claims, and it is understood that these modification examples or altered examples also belong to the technical scope of the present disclosure.

In addition, the effects described in the above-described exemplary embodiments are illustrative or exemplary, and are not limited to those described in the above-described exemplary embodiments. That is, the technology according to the present disclosure can achieve other effects that are clear to a person having ordinary knowledge in the technical field of the present disclosure from the description in the above-described exemplary embodiments, together with the effects described in the above-described exemplary embodiments or instead of the effects described in the above-described exemplary embodiments.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content. Further, the program in the present disclosure may be provided as a program product.

In regard to the above-described exemplary embodiments, the following supplementary notes are further disclosed.
(((1))) An information processing system comprising:
   a processor configured to:
   use a machine learning model generated using, as training data, printed material data to be printed by a job, request source information that identifies a request source of printing, and a history of print settings for printing of the job, to output, in a case where input of the printed material data and the request source information is received, the print settings that are recommended.
(((2))) The information processing system according to (((1))),
   wherein the machine learning model is generated further using, as the training data, a history of distribution destination information that identifies a distribution destination of a printed material, and
   the processor is configured to:
      output, in a case where input of the distribution destination information is further received, the print settings corresponding to the distribution destination.
(((3))) The information processing system according to (((1))) or (((2))),
   wherein the machine learning model uses, as a target of the training data, a print history of the job registered by a registrant who satisfies a predetermined condition.
(((4))) The information processing system according to (((3))), wherein the processor is configured to:
   determine the registrant who satisfies the predetermined condition based on years of service.
(((5))) The information processing system according to (((3))) or (((4))), wherein the processor is configured to:
   determine the registrant who satisfies the predetermined condition based on designation by a user.
(((6))) The information processing system according to any one of (((3))) to (((5))), wherein the processor is configured to:
   determine the registrant who satisfies the predetermined condition based on the number of registrations of the job.
(((7))) The information processing system according to any one of (((1))) to (((6))),
   wherein the machine learning model is generated further using, as the training data, a history of registrant information that identifies a registrant of the job, and
   the processor is configured to:
      output, in a case where input of the registrant information is further received, the print settings corresponding to the registrant.
(((8))) The information processing system according to (((7))), wherein the processor is configured to:
   output, in a case where input of the registrant information that designates a plurality of registrants is received, integrated print settings obtained by integrating the print settings corresponding to each of the plurality of registrants.
(((9))) The information processing system according to (((7))) or (((8))), wherein the processor is configured to:
   output, in a case where input of the registrant information that designates a plurality of registrants is received, a plurality of preview images respectively printed with the print settings corresponding to each of the plurality of registrants.
(((10))) An information processing method executed by a computer, the information processing method comprising:
   using a machine learning model generated using, as training data, printed material data to be printed by a job, request source information that identifies a request source of printing, and a history of print settings for printing of the job, to output, in a case where input of the printed material data and the request source information is received, the print settings that are recommended.
(((11))) An information processing program causing a computer to execute a process comprising:
   using a machine learning model generated using, as training data, printed material data to be printed by a job, request source information that identifies a request source of printing, and a history of print settings for printing of the job, to output, in a case where input of the printed material data and the request source information is received, the print settings that are recommended.

With the information processing system according to (((1))), the information processing method according to (((10))), and the information processing program according to (((11))), the print settings reflecting the tendency of each request source may be recommended in a case of printing the job, as compared to a case where the request source of printing is not taken into consideration.

With the information processing system according to (((2))), the print settings reflecting not only the request source of printing but also the tendency of each distribution destination of the printed material may be recommended.

With the information processing system according to (((3))), only the history registered by the registrant who satisfies the predetermined condition may be used as a target of learning.

With the information processing system according to (((4))), the history based on a degree of accumulated work experience and knowledge in accordance with the years of service may be used as a target of learning.

With the information processing system according to (((5))), the history based on the user's intentions or performance evaluations may be used as a target of learning.

With the information processing system according to (((6))), the history based on a degree of accumulated work experience or knowledge in accordance with an actual work performance may be used as a target of learning.

With the information processing system according to (((7))), the individual print settings in which not only the request source of printing but also the tendency of each registrant is taken into consideration may be recommended.

With the information processing system according to (((8))), the print settings obtained by integrating knowledge of the plurality of registrants may be recommended.

With the information processing system according to (((9))), the information that supports comparison and consideration of the print settings may be provided to the user.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

- 1:: printing system
- 10:: client computer
- 20:: print server
- 30:: printer
- 50:: communication unit
- 100:: information processing system
- 101:: processor
- 102:: ROM
- 103:: RAM
- 104:: storage
- 105:: communication interface
- 106:: user interface
- 107:: bus
- 108:: information processing program
- 110:: input unit
- 120:: recording unit
- 130:: model generation unit
- 140:: input data supply unit
- 150:: output data acquisition unit
- 160:: output unit

## Claims

1. An information processing system comprising:
a processor configured to:
use a machine learning model generated using, as training data, printed material data to be printed by a job, request source information that identifies a request source of printing, and a history of print settings for printing of the job, to output, in a case where input of the printed material data and the request source information is received, the print settings that are recommended.

2. The information processing system according to claim 1,
wherein the machine learning model is generated further using, as the training data, a history of distribution destination information that identifies a distribution destination of a printed material, and
the processor is configured to:
output, in a case where input of the distribution destination information is further received, the print settings corresponding to the distribution destination.

3. The information processing system according to claim 1 or 2,
wherein the machine learning model uses, as a target of the training data, a print history of the job registered by a registrant who satisfies a predetermined condition.

4. The information processing system according to claim 3, wherein the processor is configured to:
determine the registrant who satisfies the predetermined condition based on years of service.

5. The information processing system according to claim 3 or 4, wherein the processor is configured to:
determine the registrant who satisfies the predetermined condition based on designation by a user.

6. The information processing system according to any one of claims 3 to 5, wherein the processor is configured to:
determine the registrant who satisfies the predetermined condition based on the number of registrations of the job.

7. The information processing system according to any one of claims 1 to 6,
wherein the machine learning model is generated further using, as the training data, a history of registrant information that identifies a registrant of the job, and
the processor is configured to:
output, in a case where input of the registrant information is further received, the print settings corresponding to the registrant.

8. The information processing system according to claim 7, wherein the processor is configured to:
output, in a case where input of the registrant information that designates a plurality of registrants is received, integrated print settings obtained by integrating the print settings corresponding to each of the plurality of registrants.

9. The information processing system according to claim 7 or 8, wherein the processor is configured to:
output, in a case where input of the registrant information that designates a plurality of registrants is received, a plurality of preview images respectively printed with the print settings corresponding to each of the plurality of registrants.

10. An information processing method executed by a computer, the information processing method comprising:
using a machine learning model generated using, as training data, printed material data to be printed by a job, request source information that identifies a request source of printing, and a history of print settings for printing of the job, to output, in a case where input of the printed material data and the request source information is received, the print settings that are recommended.

11. An information processing program causing a computer to execute a process comprising:
using a machine learning model generated using, as training data, printed material data to be printed by a job, request source information that identifies a request source of printing, and a history of print settings for printing of the job, to output, in a case where input of the printed material data and the request source information is received, the print settings that are recommended.
